# EUROPEAN PATENT SPECIFICATION

(11) **EP 2 247 653 B1**
(45) Date of publication and mention of the grant of the patent: **04.01.2012**
(21) Application number: 09706838.1
(22) Date of filing: 29.01.2009
(51) Int. Cl.: C08J 9/00, B29C 44/26

(54) **FOAMED POLYPROPYLENE SHEET**
GESCHÄUMTE POLYPROPYLENFOLIE
PLAQUE DE POLYPROPYLÈNE EXPANSÉ

(30) Priority: 30.01.2008 EP 08425050
(43) Date of publication of application: 10.11.2010
(73) Proprietor: Renolit Gor S.p.A., 10060 Buriasco (TO) (IT)
(72) Inventor: ODINO, Adriano, I-10060 Torino (IT); MARCARINO, Sandro, I-10060 Torino (IT); VAN DER STEEN, Stephan, 57489 Drolshagen-Schurholz NRW (DE); GIOVANNINI, Raffaella, I-10060 Torino (IT); FOGLIATI, Massimiliano, I-10100 Torino (IT)
(74) Representative: Karaghiosoff, Giorgio Alessandro
(86) International application number: PCT/EP2009/050979
(87) International publication number: WO 2009/095426

(56) References cited:
- WO-A-2007/050324
- WO-A1-2005/073297
- DE-A1- 2 048 311
- US-A- 2 345 009
- US-A- 4 820 749
- US-A1- 2002 012 771
- US-A1- 2004 072 924
- US-A1- 2004 147 625
- US-A1- 2006 135 691
- US-B1- 6 590 004
- DATABASE WPI Week 200482 Thomson Scientific, London, GB; AN 2004-825096 XP002487841 & JP 2004 307605 A (KANEKA CORP) 4 November 2004 (2004-11-04)

## Description

The invention relates to a foamed polypropylene sheet, which sheet is composed of a blend of polypropylene and a vegetable filler, to be added with a gas or any other foaming agent.

Foamed polypropylene sheets are known in the art which contain mineral fillers, such as talc or the like. These sheets have satisfactory foaming properties, which reduce the density and specific weight of the sheet material. Nevertheless, mineral fillers have a relatively heavy weight so the specific weight of the material, both in a step preceding the sheet formation, and in a step with the sheet in the foamed condition, remains particularly high, with reference to desired values within various application fields.

The document DE 2048311 discloses a plate made out of blend of polyolefin and wood flour.

The document WO2007/050324 discloses a composite material of a thermoplastic and natural cellulosic fibers with a polymeric compatibilizer having hydrophilic and hydrophobic moieties. The composiion comprise: 20-60 weight percent of one or more themoplastic; 40-80 weight percent of natural cellulosic fibers and 0,5 to 15 weight percent of a polimeric compatibilizing agent-based on the weight of the cellulosic fiber. The material can be extruded and foamed.

The document US 2,34,009 discloses a non metallic material of very light weight which has valuable thermal and acoustical insulating properties. The document discloses a very diluite solution or dispersion containing a binding agent such as latex or aqueous resinous, a filter aid and a medium of extension (such as finely pulped newspaper or woo d pulp). The three components are mixed to form a dilute aqueous suspension, filtered without disturbing the matrix, then gradually the matrix is subjected to a predetermided pressure without breaking its continuous bonded structure and finally the matrix is dried.
To the medium of the extension, finely ground regranulated cork can be added.
The cork is employed as a basic material for obteing a low density.
No foaming agents are used.

The document US 6,590,004 discloses a foam composite wood replacement material and a method for its manifacture. The material that may be used to make the foam composite include cellulosic filler, inorganic filler, polymers, blowing agents and foaming agents, the cellulosic filler and the PVC material are mixed together and extruded and coold for achieve a final net shape. The resultant product exhibited desired appearence, strenght, durablity and weatherability. In addition, the final net shape possessed desired foam density and foam swell.

The document 4,820,749 discloses a composite material based on a polymeric or copolymeric substance which may be a thermoplastic or thermosetting material or rubber and an organic material which is cellulosic or starch. The cellulosic material is grafted with a silylating agent. (auxiliary agent: maleic anhydride).

Silanes grafted and bonded onto a hydrophilic cellulosic fibers whether mixed or not with an inorganic particles contribute to the wripping and bonding these materials with the hydrophobic polymer resin.

The resultant composite materials in this invention have high durability and less surface fracture and superior stability under extreme temperature conditions compared to the other composite filled with fiber glass or mica or the like.

The document US2004/0072924 discloses polyolefin composites comprising natural fibers. The natural-filled polyolefin composites have improved mechanical properties with inclusion of reactive organosilane and a functionalized polyolefin coupling agent during their manufacture. The document discloses the use of maleic anhydride-modified polyolefin as a coupling agent fiber/polyolefin resin.

The document from DATABASE WPI Week 2004-825096 & JP-A-2004-307605 Thomson Scientific, London, GB discloses an extruded polypropylene foam sheet which is cooled just after extrusion. Then the surface of the sheet is reheated.

The document US 2006/0135691 discloses a foaming additive to foam a polymeric composition. The foaming additive may include a blowing agent and a surfactant. The use of additive may allow the user to produce a foamed composite material that is highly filled, lightweight and relatively strong.

The document US 2004/0147625 describes a cellular wood plastic composite with soft wood flour and hight density polyethylene (ethyl vinyl acetate) added with a blowing agent.

The document WO 2005/073297 reates to an expanded compaction material for a synthetic lawn and to a process for producing the same. The mixture comprises an expanded elastomer, inorganic filler and/or organic filler. Chemical and physical expanding agent are used: material expansion during the extrusion step helps to reduce material density as mass/volume.

The document US 2002/0012771 relates to a method for the production of a pannel and a thermoformed pannel in which the region of greater thickness are formed by an expanded cellular material having lower density. The extrusion of the sheet of plastic material added with a blowing agent can be conducted in order to obtein a partial expansion; then the sheet is heated in order to cause post-expansion of the material and the sheet is thermoformed in a thermoforming cavity.

These sheets are used for making various types of products such as particularly, but without limitation, interior panels for motor vehicles.

Said sheets have to show a considerable mechanical strength in combination with a good level of flexibility, a rupture without sharp edges and they have to show a density i.e. a weight as low as possible.

Sheets made of thermoplastic material have the characteristic of being thermoformable, for example by means of moulding, and have a good mechanical strength, a good rupture behaviour, in combination with low manufacturing costs, due to the fact that the thermoplastic material is mixed with at least an inert vegetable and/or mineral filler.

Vegetable fibers provide the advantage of being lighter than mineral fillers. Nevertheless, these known sheets have a low vegetable filler content, not exceeding 30% of the total mass of the blend.

A higher vegetable and/or mineral filler content in the blend of the sheet material also provides the advantage of reducing material costs by replacing a larger part of the more expensive material, i.e. the polypropylene matrix, with the low-cost material, i.e. the filler. Obviously, as is known, the filler content should remain within well-defined limits for the sheet to exhibit the desired mechanical properties.

Moreover sheets described above provide to use chemical and/or physical blowing agents causing the sheet to be foamed during the forming process, such as carbon dioxide, nitrogen, helium, H2O, HFC, butane and low boiling point hydrocarbon compounds.

Essentially it is necessary for foamed sheets to be made with very low costs, without changing too much mechanical stiffness characteristics giving the shape stability and strength to foamed sheets, particularly to sheets for the internal lining of motorvehicles.

Particularly transport costs can be reduced by increasing amounts that can be transported for each load that is by transporting not foamed sheets having a reduced weight on their own and small volumes, which sheets are foamed, thus reducing their density, in a processing step following the transport. The reduction in the sheet weight further guarantees a greater handling when they are processed within the forming plant.

In addition the reduction of the sheet weight is also important as regards the specific application of said sheets, such as, for example, as the support layer of panels for internal lining of motorvehicles or the like. In such case the fact of reducing the weight of lining panels affects the overall weight of vehicles and affects the fuel consumption, performances being equal, with conventional vehicles.

In addition a more and more important requirement is to recycle the material of the sheets and also the possibility of using raw materials deriving from recycling processes in order to manufacture the sheets.

Therefore, the invention has the object of providing an improved foamed sheet of the above type, that meets the above requirements of a low specific weight, both before and after the foaming step, predetermined flexibility, stiffness and strength mechanical properties and low cost, and that can be used in compression molding processes.

The invention fulfils the above object by providing a filled polypropylene sheet according to the preamble of claim 1, further comprising the features of the charactering portion of claim 1

A waterproofing component may be directly added to the polypropylene and vegetable fiber blend, preferably before addition of the foaming agent, otherwise the vegetable fibers may undergo a preventive treatment in which such vegetable fibers are blended with the waterproofing agent before being added with polypropylene and the foaming agent.

Waterproofing of vegetable fibers prevents such fibers from absorbing the gas or foaming agent due to their porosity, thereby reducing foaming of the polypropylene and vegetable filler blend.

Here, the polypropylene matrix, due to its hydrophobic properties, is incompatible with the hydrophilic vegetable fibers. Therefore, the polypropylene matrix cannot intimately bind the vegetable filler for waterproof coating of vegetable fibers.

As a waterproofing agent, compatibilizing agents composed of organic molecules with hydrophilic substituents have been found to be a advantageous.

Said organic molecules with hydrophilic substituents, are silane or organo-silane, zircoaluminate or aluminate compounds, or particularly maleic anhydride-modified polyolefins.

Concerning the compatibilizing / waterproofing agents, these are added to the blend by 2% to 15% by weight, based on the weight of the vegetable fiber component.

Concerning the vegetable fibers, these may be of any type whatever and particularly include wood flour.

Concerning the foaming agent, this may be a gas or any other foaming agent. Typically, as foaming gases the following are particularly used, without limitation: carbon dioxide, nitrogen, helium, H₂O, HFC, butane and low-boiling-point hydrocarbon compounds or other gases used in foaming processes and which are chemically compatible with components of the material blend composing the sheet.

These agents are added in usual amounts for foaming processes, according to agent types, i.e. from 0.02% by weight to 20% by weight of the blend.

As described above and as confirmed with reference to the examples below, a foamed sheet can be obtained from a blend of polypropylene and vegetable fillers, particularly wood flour, which has a high filler content and low specific weight, thanks to full foaming thereof.

According to an embodiment the foamed sheet is made of a blend of thermoplastic polymers and a vegetable and/or mineral filler containing cork flour.

Said the blend contains from 1 to 70% by weight of cork flour.

Cork has a particular cell-like structure making it light, elastic, compressible, flexible, impermeable, imputrescible, in addition to the fact of being a bad conductor of sound and heat.

Such characteristics makes it suitable for being used as a sound and heat insulation material and for manufacturing panels.

Particularly a sheet composed of a blend of thermoplastic polymers and a vegetable and/or mineral filler containing cork flour has a particularly reduced density.

Due to the low weight of cork flour and to the ability of cork to expand its volume under heating, it is possible to obtain compounds for making panels and foamed sheets having a considerably reduced overall weight.

Moreover the possibility of foaming the cork, and so of reducing the density of the material wherein it is mixed, only after heating it, allows panels or sheets to be manufactured in such a way that during the manufacturing step and when they are transported to locations where they will be used, they occupy small volumes, since they are not in the foamed condition, and at the same time it allows foamed products to be obtained, having a considerably reduced density, upon heating during the thermoforming step. Therefore in such case the cork filler acts both as vegetable filler and also as a thermally activated blowing agent.

According to still a further improvement of the invention, the blend according to one or more of the variation described above can comprise also a predetermined amount of long glass fibres.

Thanks to this fibers the mechanical resistance of the sheet is improved.

According to still another improvement instead of the ling glass fibres the invention provides the use of long or elongated fibers which are cellulose fibers.

Such sheets are used particularly for the interior lining of motor vehicles or the like. The sheets for making such products further to ensure thermoformability must exhibit various properties after fabrication thereof.

On the one hand, the panels and the sheets of which they are made shall have as light a weight as possible. On the other hand, particularly when used for the interior lining of vehicles, they shall exhibit mechanical stiffness properties to impart strength and shape stability to the lining panels. Upon impact, the sheets shall have such a mechanical behavior as to prevent failure at predetermined impact force values. Nevertheless, when failure occurs, it shall be a ductile failure, leaving no sharp or cutting edges along fracture areas.

Concerning the achievement of a higher mechanical strength against impact stresses, the addition of elongate fibers to the sheet blend is known to provide important advantages.

Concerning glass fibers, these have a relatively heavy weight and poor flexural strength, when curved or bent, as well as poor elongation strength, wherefore when such glass fibers are used for sheet reinforcement, they easily break, thereby leaving sharp and cutting fracture edges.

As an alternative to glass fibers, vegetable fibers are known to be used, such as hemp, jute, coir, kenaf, flax, ramie, abaca, sisal, curaua, palm, cabuya, opuntia, kapok fibers and other types of similar elongate fibers. Such prior art vegetable fibers have the drawback of a relatively heavy weight, because they are available as raw fibers, and of little compatibility with the hydrophobic plastic materials, particularly polyolefins or the like, of the sheet. Therefore, purely mechanical blending of elongate vegetable fibers does not ensure optimal surface adhesion and embedding of vegetable fibers in the plastic matrix.

Concerning the overall sheet weight, this can be reduced as indicated in the present invention thanks to foaming which reduces the density, i.e. the specific weight of the sheet material.

Sheet weight reduction is critical for processing, because it provides easier handling, e.g. in a sheet forming system and/or for operating personnel. Sheet weight reduction is also critical when such sheets are specifically used, for instance, as a bearing layer for interior panels of motor vehicles or the like. In this case, weight reduction in lining panels is reflected in the overall vehicle weight and eventually in fuel consumption as compared with traditional vehicles having equal performances.

Finally, an increasingly important requirement is recyclability of the sheet material, in addition to the possibility of using recycled raw materials for making sheets.

Concerning glass fibers, these do not obviously allow recycling of the material. The use of vegetable fibers allows recycling of the sheet material, but recycled fibers tend to lose a large part of the mechanical properties that distinguish them from more traditional vegetable fillers.

The above requirements are partially in contrast with each other.

Mixing elongated cellulose fibres to the blend of materials of the sheet has the object of improving a thermoformable sheet as described hereinbefore for optimization of the mechanical properties of the sheet, by simple and inexpensive arrangements.

It was surprisingly found that cellulose fibers can be more effectively incorporated or embedded in the matrix of plastic material, particularly of polypropylene. Also, while cellulose fibers have a lower mechanical energy absorption capacity than glass fibers, they exhibit a greater extensibility. Thus, upon impact, the fracture surface of the fibers is more rounded and hence the sheet has chamfered fracture edges, reducing the risk of injuries.

Thanks to the improved compatibility of cellulose fibers with the plastic material, said fibers exhibt a more effective adhesion to the matrix wherefore, in spite of a lower mechanical energy absorption capacity, cellulose fibers impart a higher mechanical strength as compared with traditional vegetable fibers.

Moreover, due to flexibility and elasticity characteristics the cork flour, which is present in the blend for making the foamed sheet according to the present invention, upon impact, can help in having a more rounded rupture surface of the sheet such to reduce the risk of injury.

In addition to recyclability of the sheet material, long cellulose fibers are a raw material that can be obtained from recycling of other cellulose-based raw materials, therefore the sheet of the present invention has a very low environmental impact as compared with prior art sheets.

Yet another advantage of the sheet of the present invention consists in that cellulose fibers have a higher temperature resistance than either raw vegetable fillers or wood flour.

Since cellulose fibers are odorless, whereas both vegetable fibers and wood flour have a characteristic odor, the sheet that is wholly or at least partly filled with cellulose fibers is odorless or has a fainter odor than prior art sheets.

According to an improvement of the invention, which further enhances adhesion of the cellulose fibers to the plastic matrix, a compatibilizer is added to the material blend for compatibilizing the plastic material and particularly the cellulose fiber-filled polypropylene matrix.

As a compatibilizing agent, organic molecules with hydrophilic substituents are used i.e. silane or organo-silane, zircoaluminate or aluminate compounds.

A particular additive for compatibilizing cellulose fibers with polypropylene is an organic compound and particularly a polyolefin compound with maleic anhydride substituents.

Concerning the compatibilizing/waterproofing agents, according to the invention the polypropylene blend containing the powdered vegetable filler and long cellulose fibers are added with 2% to 15% by weight compatibilizing/waterproofing agent based on the total weight of the vegetable fiber and the long cellulose fiber constituent.

The compatibilizing/waterproofing agent may be blended with long cellulose fibers even prior to addition of said fibers to the blend of polypropylene and the powdery vegetable filler, particularly wood flour.

The long cellulose fibers may be also blended with the powdery vegetable filler and to the compatibilizing/waterproofing agent prior to the addition of the polypropylene constituent. This provides the advantage of waterproofing the powdery vegetable fibers that form the filler of the mass of material and of reducing the porosity of said vegetable fibers and maximizing the foaming effect.

Obviously, depending on whether the compatibilizer/waterproofing agent is intended to exercise its action on the long cellulose fibers only or on both such fibers and the filler of powdery vegetable fibers, i.e. wood flour, the above amounts shall be related to the weight of either the part of long cellulose fibers or to the comprehensive weight of the latter and the filler of vegetable fibers, i.e. the wood flour.

According to another variant, the compatibilizing/waterproofing agent may be blended separately and in various amounts within the above range, with the cellulose fibers and the powdery vegetable fibers, prior to blending thereof with each other and with the mass of the polyolefin material, particularly polypropylene.

In order to optimize the mechanical properties of the sheet, the invention relates to a sheet as described hereinbefore in which the cellulose fiber content is in a range from 3 to 33% by weight of the blend of the sheet material.

The fibers are from 2 to 25 mm long.

A specific blend that provides particularly high mechanical strength, weight and impact behavior values is composed of a blend of 40 to 71% by weight polypropylene and 29 to 60% by weight wood flour to be added with the above amounts, i.e. from 3 to 33% by weight, of cellulose fibers characterized by a length from 2 to 25 mm.

The foaming agent is added in such an amount as to limit the overall density of the sheet below a maximum threshold of 1 g/cm³.

Similarly to what has already said above as foaming agents either chemical or physical agents may be used as foaming agents.

According to the variant in which the foamed sheet is made of a blend of thermoplastic polymers and a vegetable and/or mineral filler containing cork flour, wherein the blend contains from 1 to 70% by weight of cork flour, as the percentage of the cork inside the compound increases products characterized by a more and more reduced density are obtained.

Such as shown in figures below, the increase in the percentage of cork within the blend of polyolefin thermoplastic polymers, particularly polypropylene, with the vegetable and/or mineral filler, causes the density to be reduced and the flexural modulus to be decreased, that is it causes the stiffness of the finished product to be reduced.

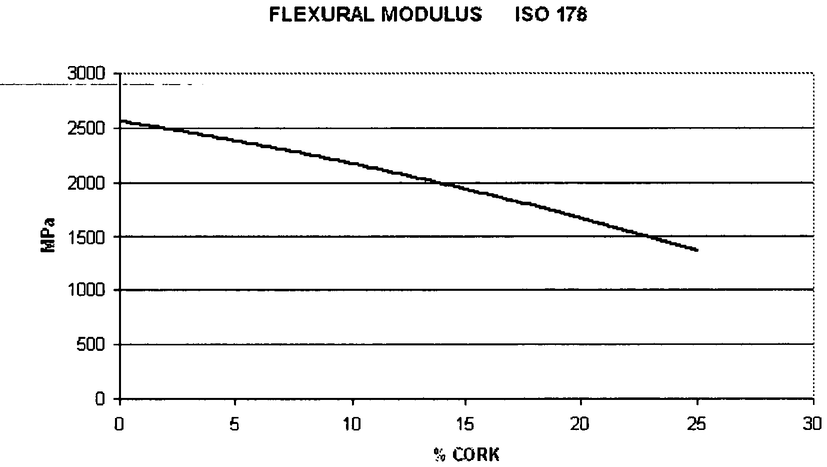

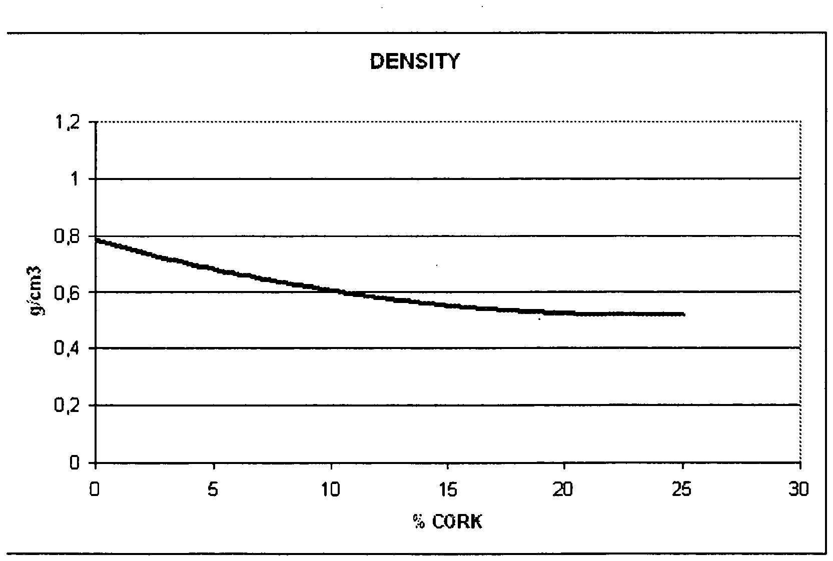

Particularly a sheet whose formation blend provides cork flour to be added with an amount from 1 to 70% by weight has a density ranging from 0,4 to 1,15 g/cm³ and a value of the flexural modulus ranging from 3000 to 500 Mpa.

According to an improvement the granulometry of the cork flour is lower than 5 mm, particularly ranging from 0,1 to 0,8 mm.

The blend object of the present invention contains from 10 to 80 % by weight of thermoplastic polymers, particularly polyolefin ones and more particularly polypropylene, or acetal copolymers such as for example ethyl vinyl acetate (EVA) and it contains from 1 to 70% by weight of vegetable fillers, different from cork flour.

Again according to an improvement of the present invention, the above blend can also contain a predetermined amount, from 0,5 to 15 % by weight, of mineral filler.

As regards the vegetable filler, it can be of any type and particularly it can be composed of wood fiber or flour or vegetable fibers such as for example cellulose, hemp, jute, coco, kenaf, flax, ramie, abaca, sisal, curaua, palm, cabuya, opuntia, kapok fibers and other types of like fibers, which fibers increase the mechanical strength of the sheet.

As described above, according to an improvement of the invention improving the anchorage of vegetable fibers to the plastic material matrix, the blend further comprises a component compatibilizing the polymer matrix with the vegetable filler which compatibilizing component is added to the blend in an amount ranging from 0,2% to 15% by weight with reference to the overall weight of the blend.

Specific compatibilizing agents, composed of organic molecules with hydrophilic substituents, are silane or organo-silane, zircoaluminate or aluminate compounds, or particularly maleic anhydride-modified polyolefins.

Said agents are particularly advantageous also as waterproofing agents of vegetable fibers: the fact of waterproofing of vegetable fibers prevent them from absorbing the blowing agent or gas due to their porosity, thus reducing the foaming effect of the blend of polypropylene and vegetable filler.

Said component can be added directly to the blend of polypropylene and vegetable fibers preferably before adding the blowing agent, or vegetable fibers can be subjected to a preventive treatment providing said vegetable fibers to be mixed with the compatibilizing agent, in such case even at liquid state, wherein the active component is dispersed into an acqueous or organic solvent, which solvent can be removed by drying fibers, before mixing them with polypropylene and with the blowing agent: in such case a process making the vegetable component as hydrophobic can be advantageous, such as for example an acetylation process for the vegetable component for example by treating the vegetable component with acetic acid.

In order to have a foamed sheet composed of a blend of polypropylene and vegetable and/or mineral fillers having a low specific weight, both before and after the foaming step, cork flour is added to the above blend, which flour, due to its chemical-physical characteristics, allows the sheet to be completely foamed even without using chemical and/or physical blowing agents.

Therefore the weight can be reduced such as described in the present invention by adding cork flour to the blend of thermoplastic polymers and vegetable and/or mineral fillers, which has itself a low specific weight, and by means of a foaming, causing the density to be decreased, i.e. the specific weight of the sheet material, which is obtained by activating the cork i.e. by expanding the cork by heating it during the step extruding the sheet and/or during the thermoforming step, whether it is provided in the process for manufacturing the foamed sheet.

According to an improvement, in order to reduce the weight of the foamed sheet, the blend comprises a further component that is at least an endothermic or exothermic chemical blowing agent, and/or a physical blowing agent which is added as standard amounts for foaming processes and which amounts change depending on the type of agent.

As regards the blowing agent, it can be a gas or any other chemical and/or physical blowing agent, as described above, used in foaming processes and which are chemically compatible with components of the material blend composing the sheet.

Chemical and/or physical blowing agents act on the polymer matrix, while the cork flour acts independently from the thermoplastic component.

Said cork flour, due to its chemical-physical characteristics, allows to have a foamed sheet composed of a blend of polypropylene and vegetable and/or mineral fillers even without using chemical and/or physical blowing agents.

Therefore the invention allows foamed sheets to be obtained even without using chemical and/or physical blowing agents or as an alternative it allows the sheet to be completely foamed by means of a synergic effect between the cork flour and said blowing agents, thus increasing the sheet foaming.

Moreover considering that the recyclability of the material of sheets is a requirement becoming more and more important, the use of cork, that is a completely natural compound instead of chemical blowing agents for obtaining the foaming of the sheet, helps the sheet according to the present invention to have a very low environmental impact with respect to known sheets.

Again a further advantage of the sheet according to the present invention containing cork flour is the fact that the cork flour gives the sheet optimum sound and heat insulation characteristics and a greater fire resistance.

This invention also relates to a method of making a foamed sheet as described above.

In the method of the invention the foaming process is carried out during extrusion of the sheet.

Here, the process includes the steps of blending the polypropylene component with the vegetable filler and obtaining the sheet by extrusion of said blend through an extruder.

According to the invention, a foaming agent, in the form of a physical or chemical foaming agent, is added to the blend of polypropylene and vegetable fibers.

As physical foaming agents various gases may be used, such as carbon dioxide or nitrogen or other gases that are typically used in foaming processes as long as they are chemically compatible with the blend of the sheet material.

As chemical foaming agents, the following materials may be particularly used, without limitation:
azodicarbonamide, oxybis, sodium bicarbonate, sodium bicarbonate and citric acid mixtures, HFC or anyway a mixture of acid and basic compounds such that they are activated at extrusion or moulding temperatures of the material and are able to release gas or gas mixtures mainly composed of CO₂.

Physical agents may be injected into the mass of the blend of polypropylene and vegetable fibers within the extruder, particularly the extruder barrel, thereby affording direct sheet foaming during extrusion.

Chemical agents may be added to the blend of polypropylene and vegetable fibers in the extruder.

In this case, they are added in typical amounts for achieving predetermined foaming conditions.

Nevertheless, the invention envisages two separate alternative processes.

According to a first alternative, the foaming agents are selected in view of their direct and immediate activation in the extruder, wherefore foaming occurs directly, at the same time as the sheet is extruded.

On the other hand, in the second alternative, the foaming agent is only partially activated, i.e. causes partial foaming, during extrusion, such foaming being completed during the forming process, by heating to a predetermined activation temperature of the foaming agent.

This is particularly advantageous because all forming processes require a preventive sheet heating step prior to the forming step, i.e. prior to deformation of the sheet into the desired final shape. This heating step may act as a simultaneous foaming agent activation step, provided that the sheet heating temperature is set to a thermal foaming agent activation value.

In this case, the extruded and partially foamed sheet is an intermediate product.

Furthermore, the forming step involves preventive heating of the extruded and partially foamed sheet to the activation temperature of the foaming agent, and hence a sheet foaming step occurs prior to the forming step proper by compression molding.

According to a further improvement, that can be combined with one or more of the above method steps, the method of the invention provides the additional step of submitting the vegetable fibers to a waterproofing treatment prior to extrusion.

During such waterproofing treatment, the vegetable fibers are blended with a waterproofing agent.

The treatment with the waterproofing agent may be carried out either during blending of the vegetable fibers with polypropylene or in a preventive step in which the vegetable fibers only are blended with the waterproofing agent.

According to an improvement to said method steps, vegetable fibers are waterproofed using an agent for compatibilizing said vegetable fibers with the polypropylene matrix.

Such compatibilizing agent makes the hydrophobic nature of polypropylene compatible with the hydrophilic nature of vegetable fillers to form a fiber encapsulating film which can reduce fiber porosity and foaming gas absorption capacity.

As a compatibilizing agent, the invention provides the use of organic molecules with hydrophilic substituents, that is silane or organo-silane, zircoaluminate or aluminate compounds, or particularly maleic anhydride-modified polyolefins.

When according to the above mentioned improvement elongate fibres, particularly of glass or cellulose are added, than the above method comprises the following steps:
blending a predetermined amount of polyolefin material, particularly polypropylene, with a predetermined amount of a vegetable fiber filler in powder form, particularly wood flour and with a predetermined amount of long cellulose fibers;
adding a chemical or physical foaming agent to such blend;
extruding the sheet in an extruder device.

Similarly to what already said above, in the method of the invention the foaming process is carried out during extrusion of the sheet, also when elongated fibres are provided.

Here, the process includes the steps of blending the polypropylene constituent with the vegetable filler and obtaining the sheet by extrusion of said blend through an extruder.

According to the invention, a foaming agent, in the form of a physical or chemical foaming agent, is added to the blend of polypropylene and vegetable fibers.

As physical foaming agents various gases may be used, such as carbon dioxide or nitrogen or other gases that are typically used in foaming processes as long as they are chemically compatible with the blend of the sheet material.

As chemical foaming agents, the following materials may be particularly used, without limitation: azodicarbonamide, oxybis, sodium bicarbonate, sodium bicarbonate and citric acid mixtures, HFC or anyway a mixture of acid and basic compounds such that they are activated at extrusion or moulding temperatures of the material and are able to release gas or gas mixtures mainly composed of CO₂.

Physical agents may be injected into the mass of the blend of polypropylene and vegetable fibers within the extruder, particularly the extruder barrel, thereby affording direct sheet foaming during extrusion.

Chemical agents may be added to the blend of polypropylene and vegetable fibers in the extruder.

In this case, they are added in typical amounts for achieving predetermined foaming conditions.

Also in this embodiment in which the blend comprises elongated fibres, particularly of cellulose, the invention envisages the two separate alternative processes already disclosed for the first embodiment.

According to a first alternative, the foaming agents are selected in view of their direct and immediate activation in the extruder, wherefore foaming occurs directly, at the same time as the sheet is extruded.

On the other hand, in the second alternative, the foaming agent is only partially activated, i.e. causes partial foaming, during extrusion, such foaming being completed during the forming process, by heating to a predetermined activation temperature of the foaming agent.

This is particularly advantageous because all forming processes require a preventive sheet heating step prior to the forming step, i.e. prior to deformation of the sheet into the desired final shape. This heating step may act as a simultaneous foaming agent activation step, provided that the sheet heating temperature is set to a thermal foaming agent activation value.

Also in this case, in which the blend comprises elongated fibres, particularly of cellulose,the extruded and partially foamed sheet is an intermediate product.

Furthermore, the forming step involves preventive heating of the extruded and partially foamed sheet to the activation temperature of the foaming agent, and hence a sheet foaming step occurs prior to the forming step proper by compression molding.

According to a further improvement, that can be combined with one or more of the above steps, the method of the invention provides the additional step of submitting at least the long cellulose fibers to a treatment for compatibilization with the polyolefin material, particularly polypropylene, prior to extrusion.

Such compatibilization and/or waterproofing treatment on at least the long cellulose fibers involves adhesion of a compatibilizing and/or waterproofing agent to the surface substrate of the long cellulose fibers.

The treatment with the compatibilizing and/or waterproofing agent may be carried out, as mentioned above, either during blending of the long cellulose fibers with the polyolefin material, or in a preventive step in which the long cellulose fibers only are blended with the compatibilizing and/or waterproofing agent, whereupon the long cellulose fibers are added to the blend of polyolefin material, i.e. polypropylene, with the filler of powdery vegetable fibers.

Advantageously, the compatibilizing and waterproofing agents are formed of the same material or combination of materials.

Such compatibilizing agent makes the hydrophobic nature of polypropylene compatible with the hydrophilic nature of vegetable fillers to form a fiber encapsulating film which can reduce fiber porosity and foaming gas absorption capacity.

As a compatibilizing agent, the invention provides the use of organic molecules with hydrophilic substituents, that is silane or organo-silane, zircoaluminate or aluminate compounds, or particularly maleic anhydride-modified polyolefins.

As an alternative to the above, the filler of powdery vegetable fibers may also undergo the treatment with the compatibilizing and/or waterproofing agent.

This may occur using the same or different compatibilizing/waterproofing agents for the long cellulose fibers and for the filler of powdery vegetable fibers, possibly in equal or different amounts.

Two separate processes may be provided for treating the long cellulose fibers with the compatibilizing and/or waterproofing agent and the filler of powdery vegetable fibers with a compatibilizing and/or waterproofing agent respectively, which processes are carried out in parallel and are followed by blending of the blend of long cellulose fibers and the compatibilizing and/or waterproofing agent and the blend of the filler of powdery vegetable fibers and the compatibilizing and/or waterproofing agent with the constituent of polyolefin material, i.e. polypropylene.

The long cellulose fibers and the filler of powdery vegetable fibers may be also blended together and with one or more compatibilizing and/or waterproofing agents before being fed to the mass of material composed of the constituent of polyolefin material, i.e. polypropylene.

According to the variant in which the foamed sheet is made of a blend of thermoplastic polymers and a vegetable and/or mineral filler containing cork flour, the method for making the foamed sheet provides to mix polyolefin thermoplastic polymers, particularly polyolefin ones and more particularly polypropylene, or acetal copolymers such as for example ethyl vinyl acetate (EVA) and the vegetable and/or mineral filler with cork flour and to make the sheet by extruding said blend with an extruder.

The activation of the cork i.e. the foaming of the cork is obtained by heating it. Particularly cork foams directly during the extrusion step by increasing relevant process temperatures such to allow cork flour to be foamed thus decreasing the density of the material wherein it is mixed and to cause the sheet to be directly foamed during the extrusion.

It is possible to use a co-rotating or counter rotating twin screw extruder or as an alternative a single screw extruder.

In combination to or as an alternative with the foaming of the cork by heating it during the extrusion step it is possible to provide the cork flour to be heated in order to be expanded during the process forming the sheets in a furnace before arranging the extruded sheet into the mould or by heating the mould such to obtain or complete the sheet foaming process.

The foaming of the cork during the thermoforming process, when such step is provided within the process for making the sheet, allows products with a standard weight and volume to be transported, i.e. like not foamed sheets, with a consequent optimization of the transport and costs and at the same time it allows finished products with a particularly reduced density to be obtained during the thermoforming step.

Obviously the two possible ways for obtaining the reduction of the density of the blend object of the present invention, i.e. the heating with the consequent foaming of the cork during the extrusion step and during the thermoforming step, can be carried out in combination one to the other during the process forming the foamed sheet such that both said heating steps can take part in the final reduction of the density of the finished product.

The choice of the moment when the foaming has to be carried out depends on manufacturing, transport requirements, and on the type of product.

According to the above improvement, when chemical and/or physical blowing agents are added to the blend for helping in obtaining the foaming of the sheet, the method provides the following steps:
- mixing a predetermined amount of thermoplastic polymers particularly polyolefin ones and more particularly polypropylene, or acetal copolymers such as for example ethyl vinyl acetate (EVA) with a predetermined amount of a vegetable and/or mineral filler;
- adding a predetermined amount of cork flour,
- adding a chemical and/or physical blowing agent to said blend,
- extruding the sheet into an extrusion device,
- optionally thermoforming the sheet.

The chemical and/or physical blowing agent is added to said blend according to the above mentioned procedure.

Physical agents can be injected into the bulk, composed of the blend of polypropylene, vegetable and/or mineral fillers and cork flour, housed into the extruder and particularly into the extruder cylinder, thus obtaining a direct foaming of the sheet during the extrusion.

As regards chemical agents they can be added to the blend of polypropylene and vegetable fibers into the extruder.

In such case amounts typically used for achieving predetermined foaming conditions are employed.

However the invention provides two separate alternative processes.

According to a first alternative, blowing agents are such that they are immediately and directly activated within the extruder, therefore the sheet is directly foamed, also due to the expansion of the cork, contemporaneously to the extrusion of the sheet.

The second alternative provides the blowing agent to be only partially activated, i.e. it generates a partial foaming during the extrusion and said foaming is completed during the forming process by the heat activation at a predetermined activation temperature of the blowing agent.

This is advantageous since forming processes require a step for pre-heating the sheet occurring before the real forming step, i.e. the step deforming the sheet into the final desired shape by compression moulding. Such heating step at the same time can be also the activation step for the blowing agent, as well as for the cork flour, setting the heating temperature of the sheet to thermal activation values of the blowing agent.

In such case the extruded and partially foamed sheet is an intermediate product.

According to a further improvement that can be provided in combination with one or more of the preceding method steps, the method according to the invention further provides vegetable fibers to be subjected to a compatibilizing and/or waterproofing treatment by means of a compatibilizing and/or waterproofing agent before their extrusion.

Said compatibilizing and/or waterproofing agent provides the hydrophobic characteristic of the polypropylene to be compatible with the hydrophilic characteristic of vegetable fillers in order to make a film enclosing vegetable fibers reducing the porosity and so the ability of absorbing blowing gases.

The waterproofing treatment for vegetable fibers is particularly advantageous whether blowing agents are used.

It has to be noted that besides the reduction in weight, considerable advantages are achieved relatively to the optimization of the mechanical features of the sheet also without subjecting the sheet to foaming.

Further characteristics and advantages of the present invention will be apparent from the following examples.

### EXAMPLE 1A

A blend of 65% polypropylene and 35% wood flour was of a co-rotating/counterrotating extruder. The wood flour was preventively treated with 9% by weight waterproofing/compatibilizing agent consisting of a maleic anhydride-based organic material.

As a foaming agent, 2% by weight low-boiling-point organic compound, in thermoplastic microcapsules, was added to the blend.

An extruded sheet was thus delivered by the extruder, which was directly foamed during extrusion and exhibited the following characteristics:

| | |
|---|---|
| Density: | 0.8 g/cm³ |
| Charpy ISO 179: | above 6.5 KJ/m² |
| Flexural modulus: | above 2500 MPa |

### EXAMPLE 1B

Like Example 1A, except that the compatibilizing agent was directly added to the polypropylene and wood flour blend.

An extruded sheet was thus obtained, which was directly foamed during extrusion and exhibited the following characteristics:

| | |
|---|---|
| Density: | 0.85 g/cm³ |
| Charpy ISO 179: | above 5 KJ/m² |
| Flexural modulus: | above 2300 MPa |

### EXAMPLE 2A

Like Example 1A, except that, as a foaming agent, nitrogen gas was used, which was injected into the extruder barrel.

An extruded sheet was thus obtained, which was directly foamed during extrusion and exhibited the following characteristics:

| | |
|---|---|
| Density: | 0.7 g/cm³ |
| Charpy ISO 179: | above 5.5 KJ/m² |
| Flexural modulus: | above 2700 MPa |

### EXAMPLE 2B

Like Example 2A, except that the compatibilizing agent was directly added to the polypropylene and wood flour blend.

An extruded sheet was thus obtained, which was directly foamed during extrusion and exhibited the following characteristics:

| | |
|---|---|
| Density: | 0.75 g/cm³ |
| Charpy ISO 179: | above 4 KJ/m² |
| Flexural modulus: | above 2450 MPa |

### EXAMPLE 3A

A blend of 65% polypropylene and 35% wood flour was introduced in the barrel of a co-rotating/counterrotating extruder. The wood flour was preventively treated with 9% by weight waterproofing/compatibilizing agent consisting of a maleic anhydride-based organic material.

2.5% sodium bicarbonate was added to the blend as a chemical foaming agent.

An extruded sheet was thus delivered by the extruder, which was partially foamed during extrusion and exhibited the following characteristics:

| | |
|---|---|
| Density: | 0.95 g/cm³ |
| Charpy ISO 179: | above 6.5 KJ/m² |
| Flexural modulus: | above 2100 MPa |

The sheet underwent a subsequent forming step, including a first heating step, followed by compression molding. During the heating step, the heating temperature was 185°, corresponding to the activation temperature of the foaming agent.

Activation of the foaming agent caused foaming of the sheet, whereby a foamed sheet was obtained that exhibited the following characteristics:

| | |
|---|---|
| Density: | 0.75 g/cm³ |
| Charpy ISO 179: | above 4.5 KJ/m² |
| Flexural modulus: | above 2250 MPa |

### EXAMPLE 3B

Like Example 3A, except that the compatibilizing agent was directly added to the polypropylene and wood flour blend.

The sheet underwent a subsequent forming step, including a first heating step, followed by compression molding. During the heating step, the heating temperature was 185°, corresponding to the activation temperature of the foaming agent.

Activation of the foaming agent caused foaming of the sheet, whereby a foamed sheet was obtained that exhibited the following characteristics:

| | |
|---|---|
| Density: | 0.82 g/cm³ |
| Charpy ISO 179: | above 4 KJ/m² |
| Flexural modulus: | above 2100 MPa |

Further tests were carried out, using various foaming agents and various compatibilizing/waterproofing agents, such as the following foaming agents: azodicarbonamide, oxybis, sodium bicarbonate and citric acid mixtures, carbon dioxide, nitrogen, helium, H₂O, HFC, butane and low-boiling-point hydrocarbon compounds, and the following compatibilizing agents: various maleic anhydride-based organic compounds, silanes, titanates.

There have been considered also sheets in which a certain amount of strengthening fibres has been added to the above described blends. These fibres are long glass fibres. A general increase of the mechanical resistance of the sheet could be determined.

Concerning the fabrication of sheets as described herein, a number of sheets have been fabricated whose mechanical properties have been compared with traditional sheets whose material does not contain long cellulose fibers.

### EXAMPLE 4

The blend that forms the sheet contains:

| | |
|---|---|
| Polypropylene: | 50% by weight |
| Wood flour: | 35% by weight |
| Long cellulose fibers: | 10% by weight |
| Compatibilizer | 3% by weight |
| Foaming agent | 2% by weight |

A blend of 50% polypropylene and 35% wood flour and 10% long cellulose fibers was introduced in the barrel of a co-rotating/counter-rotating extruder. The wood flour and the long cellulose fibers were preventively treated with 3% by weight waterproofing/compatibilizing agent consisting of a maleic anhydride-based organic material.

As a foaming agent, 2% by weight low-boiling-point organic compound, in thermoplastic microcapsules, was added to the blend.

An extruded sheet was thus delivered by the extruder, which was directly foamed during extrusion and exhibited the following characterics:
Density:
   Charpy ISO 179 10-15Kj/m², longitudinal direction
   Charpy ISO 179 6-15Kj/m², transverse direction
   Flexural modulus ISO 178, longitudinal direction, 3000/4500 Mpa
   Flexural modulus ISO 178, transverse direction, 2200/3000 Mpa
The various constituents were further submitted to the alternative treatments as disclosed above. No differences were observed in terms of mechanical properties of the sheet.

### REFERENCE EXAMPLE

A traditional sheet was fabricated as a reference, from a material formulated as follows:

| | |
|---|---|
| Polypropylene: | 47.5% by weight |
| Wood flour: | 47.5% by weight |
| Compatibilizer | 3% by weight |
| Foaming agent | 2% by weight |

The constituents were blended and further processed exactly as described in the previous example.

The resulting sheet exhibited the following properties:
Density:
   Charpy ISO 179 4.5-5.5Kj/m², longitudinal direction
   Charpy ISO 179 3-4.5Kj/m², transverse direction
   Flexural modulus ISO 178, longitudinal direction, 3000/3500 Mpa
   Flexural modulus ISO 178, transverse direction, 2000/2600 Mpa

## Claims

1. Foamed polypropylene sheet, which sheet is composed of a blend of polypropylene and a vegetable filler, to be added with a gas or any other foaming agent, **characterized in that** the blend contains 49 to 71% by weight polypropylene and 29 to 51% by weight vegetable fibers filler, the sheet having a density below 1, and preferably about 0,9 or less, the blend further comprising an additional vegetable fiber waterproofing component.

2. A sheet as claimed in claim 1 **characterized in that** as waterproofing agent are used compatibilizing agents composed of organic molecules with hydrophilic substituents.

3. A sheet as claimed in claim 2, **characterized in that** as a compatibilizing agent are used silane or organo-silane, zircoaluminate or aluminate compounds or an organic compound with maleic anhydride substituents particularly maleic anhydride-modified polyolefins.

4. A sheet as claimed in one or more of the preceding claims, **characterized in that** carbon dioxide, nitrogen, helium, H₂O, butane and low-boiling-point hydrocarbon compounds, HFC are used as physical foaming agents, and azodicarbonamide, oxybis, sodium bicarbonate, sodium bicarbonate and citric acid mixtures or anyway a mixture of acid and basic compounds such that they are activated at extrusion or moulding temperatures of the material and are able to release gas or gas mixtures mainly composed of CO₂ are used as chemical foaming agents.

5. A sheet as claimed in one or more of the preceding claims, **characterized in that** the foaming agents are added from 0.02% by weight to 20% by weight of the blend.

6. A sheet as claimed in one or more of the preceding claims, **characterized in that** the blend comprises an amount of cork flour from 1 to 70% by weight of the sheet material blend, the granulometry of the cork flour being lower than 5 mm, particularly ranging from 0,1 to 0,8 mm.

7. A sheet as claimed in or more of the preceding claims, **characterized in that** the blend comprises glass fibers.

8. A sheet according to one or more of the preceding claims, **characterized in that** the blend comprises an amount of elongated fibres of cellulose in a range from 3 to 33% by weight of the sheet material blend, the cellulose fibers having the lenghts in a range from 2 to 25 mm.

9. A sheet as claimed in claim 8, **characterized in that** the material blend comprises a compatibilizer and waterprofing agent for compatibilizing the plastic material and particularly the polyolefin material with the cellulose fibers and waterproofing the long cellulose fiber, using the same or different compatibilizing/waterproofing agents for the long cellulose fibers and for the vegetable fibers.

10. A method of making a foamed sheet as claimed in one or more of the preceding claims, wherein the method includes the steps of blending the polypropylene component with the vegetable fibers filler and obtaining the sheet by extrusion of said blend using an extruder, a foaming agent, in the form of a physical or chemical agent being added to the polypropylene and vegetable fiber blend **characterized in that** the vegetable fibers are treated, prior to extrusion with an agent for waterproofing said vegetable fibers and with an agent for compatibilizing polypropylene with the vegetable fibers.

11. A method as claimed in claim 10, **characterized in that** the physical foaming agents and/or the chemical foaming agents have a direct and immediate activation in the extruder, wherefore foaming can occur directly, at the same time as the sheet is extruded.

12. A method as claimed in claim 10, **characterized in that** the foaming agent is of chemical type and is only partially activated, i.e. causes partial foaming, during extrusion, said foaming being completed during the forming process, by heating to a predetermined activation temperature of the chemical foaming agent.

13. A method as claimed in claim 10, **characterized in that** the treatment with the waterproofing agent is carried out either during blending of the vegetable fibers with polypropylene or in a preventive step in which the vegetable fibers only are treated with the waterproofing agent.

14. A method of as claimed in one or more of the preceding claims 10 to 13, **characterized in that** the method includes the step of adding long cellulose fibers and the compatibilizing/waterproofing agent is blended with the long cellulose fibers prior to addition of said fibers to the blend of polyolefin material and the vegetable fibers filler.

15. A method of as claimed in one or more of the preceding claims 10 to 13, **characterized in that** the method includes the step of adding long cellulose fibers and the long cellulose fibers are blended with the vegetable fibers filler and to the compatibilizing/waterproofing agent prior to the addition of the polyolefin material constituent.

16. A method of as claimed in one or more of the preceding claims 10 to 15, **characterized in that** the compatibilizing and waterproofing agent is blended separately and in various amounts with the cellulose fibers and the vegetable fibers, prior to blending thereof with each other and with the mass of the polyolefin material.

17. A method as claimed in one or more of claims 10 to 16, **characterized in that** vegetable fibers and/or cellulose fibers are waterproofed using an agent for compatibilizing said vegetable fibers and/or cellulose fibers with the polypropylene matrix.

18. An intermediate product for making foamed sheets formed through compression molding of said intermediate product and which intermediate product is in the form of a sheet composed of a blend of polypropylene and vegetable fibers, **characterized in that** said intermediate product is a partially foamed sheet and comprises a chemical foaming agent activated to such an extent as to obtain partial foaming during sheet making and capable of thermal activation at a later time after the making of said partially foamed sheet, for completion of the foaming process, said intermediate product being made by a blend according one or more of the claims 1 to 9.

19. An intermediate product as claimed in claim 18, **characterized in that** azodicarbonamide, oxybis, sodium bicarbonate, sodium bicarbonate/citric acid are used as a chemical foaming agent or a blend of acid and basic compounds such that they are activated at extrusion or moulding temperatures of the material and are able to release gas or gas mixtures mainly composed of CO₂.

20. A method for obtaining an intermediate product as claimed in claim 18 or 19, **characterized in that** it comprises one or more method steps as claimed in claims 10 to 17.

21. A method of making a thermoformed foamed sheet by compression molding, which sheet is formed of a material as claimed in one or more of the preceding claims 1 to 9, **characterized in that** the method comprises the step of heating an intermediate product consisting of a partially foamed sheet as claimed in claim 18 or 19 to the activation temperature of the chemical foaming agent, followed by three-dimensional forming of the sheet heated to said temperature in a compression mold.

## Patentansprüche

1. Geschäumte Polypropylenbahn, wobei die Bahn aus einer Mischung aus Polypropylen und einem pflanzlichen Füllstoff bestehen, der mit einem Gas oder einem anderen Schäumungsmittel zuzusetzen ist, **dadurch gekennzeichnet, dass** die Mischung 49 bis 71 Gew.-% Polypropylen und 29 bis 51 Gew.-% des pflanzlichen Faserfüllstoffs enthält, wobei die Bahn eine Dichte von weniger als 1 und vorzugsweise etwa 0,9 oder weniger aufweist, wobei die Mischung ferner eine zusätzliche Imprägnierkomponente aus Pflanzenfasern umfasst.

2. Bahn nach Anspruch 1, **dadurch gekennzeichnet, dass** als Imprägniermittel Kompatibilisierungsmittel verwendet werden, die aus organischen Molekülen mit hydrophilen Substituenten zusammengesetzt sind.

3. Bahn nach Anspruch 2, **dadurch gekennzeichnet, dass** als Kompatibilisierungsmittel Silan- oder Organosilan-, Zirconiumaluminat- oder Aluminatverbindungen oder eine organische Verbindung mit Maleinanhydridsubstituenten, insbesondere maleinanhydrid-modifizierte Polyolefine, verwendet werden.

4. Bahn nach einem oder mehreren der vorhergehenden Ansprüche, **dadurch gekennzeichnet, dass** Kohlendioxid, Stickstoff, Helium, H₂O, Butan und Kohlenwasserstoffverbindungen mit niedrigem Siedepunkt und HFC als physikalische Schäumungsmittel Verwendet werden und Azodicarbonamid, Oxybis, Natriumbicarbonat, Mischungen aus Natriumbicarbonat und Zitronensäure oder jedenfalls eine Mischung aus Säure und basischen Verbindungen derart, dass sie bei Extrusions- oder Schmelztemperatur des Materials aktiviert werden und Gas oder Gasmischungen freisetzen können, die hauptsächlich aus CO₂ bestehen, als chemische Schäumungsmittel verwendet werden.

5. Bahn nach einem oder mehreren der vorhergehenden Ansprüche, **dadurch gekennzeichnet, dass** die Schäumungsmittel zu 0,02 Gew.-% bis 20 Gew.-% der Mischung zugesetzt werden.

6. Bahn nach einem oder mehreren der vorhergehenden Ansprüche, **dadurch gekennzeichnet, dass** die Mischung eine Menge Korkmehl umfasst, die 1 bis 70 Gew.-% der Bahnmaterialmischung ausmacht, wobei die Granulometrie des Korkmehls kleiner als 5 mm ist, insbesondere im Bereich von 0,1 bis 0,8 mm liegt.

7. Bahn nach einem oder mehreren der vorhergehenden Ansprüche, **dadurch gekennzeichnet, dass** die Mischung Glasfasern umfasst.

8. Bahn nach einem oder mehreren der vorhergehenden Ansprüche, **dadurch gekennzeichnet, dass** die Mischung eine Menge länglicher Zellulosefasern im Bereich von 3 bis 33 Gew.-% der Bahnmaterialmischung umfasst, wobei die Zellulosefasern eine Länge im Bereich von 2 bis 25 mm aufweisen.

9. Bahn nach Anspruch 8, **dadurch gekennzeichnet, dass** die Materialmischung ein Kompatibilisierungsmittel und ein Imprägniermittel zum Kompatibilisieren des Kunststoffmaterials und insbesondere des Polyolefinmaterials mit den Zellulosefasern und zum Imprägnieren der langen Zellulosefasern umfasst, wobei für die langen Zellulosefasern und die Pflanzenfasern die gleichen oder verschiedene Kompatibilisierungs-/Imprägniermittel verwendet werden.

10. Verfahren zur Herstellung einer geschäumten Bahn nach einem oder mehreren der vorhergehenden Ansprüche, wobei das Verfahren die Schritte des Mischens der Polypropylenkomponente mit dem Pflanzenfaserfüllstoff und das Erhalten der Bahn durch Extrusion der Mischung mit Hilfe eines Extruders aufweist, wobei der Mischung aus Polypropylen und Pflanzenfaser ein Schäumungsmittel in Form eines physikalischen oder chemischen Mittels zugegeben wird, **dadurch gekennzeichnet, dass** die Pflanzenfasern vor der Extrusion mit einem Mittel zum Imprägnieren der Pflanzenfasern und mit einem Mittel zum Kompatibilisieren von Polypropylen mit den Pflanzenfasern behandelt werden.

11. Verfahren nach Anspruch 10, **dadurch gekennzeichnet, dass** die physikalischen Schäumungsmittel und/oder die chemischen Schäumungsmittel eine direkte und sofortige Aktivierung im Extruder aufweisen, weshalb das Schäumen direkt und zur selben Zeit wie die Extrusion der Bahn geschehen kann.

12. Verfahren nach Anspruch 10, **dadurch gekennzeichnet, dass** das Schäumungsmittel chemischer Art ist und nährend der Extrusion nur teilweise aktiviert wird, d. h. teilweises Schäumen verursacht, wobei das Schäumen während des Formgebungsverfahrens durch Erhitzen auf eine festgelegte Aktivierungstemperatur des chemischen Schäumungsmittels vervollständigt wird.

13. Verfahren nach Anspruch 10, **dadurch gekennzeichnet, dass** die Behandlung mit dem Imprägniermittel entweder während des Mischens der Pflanzenfasern mit dem Polypropylen oder in einem präventiven Schritt erfolgt, in welchem nur die Pflanzenfasern mit dem Imprägniermittel behandelt werden.

14. Verfahren nach einem oder mehreren der Ansprüche 10 bis 13, **dadurch gekennzeichnet, dass** das Verfahren den Schritt des Zugebens langer Zellulosefasern aufweist und dass das Kompatibilisierungs-/Imprägniermittel vor dem Zugeben der Fasern zur Mischung aus Polyolefinmaterial und Pflanzenfaserfüllstoff mit den langen Pflanzenfasern vermischt wird.

15. Verfahren nach einem oder mehreren der Ansprüche 10 bis 13, **dadurch gekennzeichnet, dass** das Verfahren den Schritt des Zugebens langer Zellulosefasern aufweist und dass die langen Zellulosefasern vor dem Zugeben der Polyolefinmaterialkomponente mit dem Pflanzenfaserfüllstoff und dem Kompatibilisierungs-/Imprägniermittel vermischt werden.

16. Verfahren nach einem oder mehreren der Ansprüche 10 bis 15, **dadurch gekennzeichnet, dass** das Kompatibilisierungs- und das Imprägniermittel getrennt und in verschiedenen Mengen mit den Zellulosefasern und den Pflanzenfasern und vor dem Mischen derselben miteinander und mit der Masse des Polyolefinmaterials vermischt werden.

17. Verfahren nach einem oder mehreren der Ansprüche 10 bis 16, **dadurch gekennzeichnet, dass** die Pflanzenfasern und/oder die Zellulosefasern mit Hilfe eines Mittels zum Kompatilisieren der Pflanzenfasern und/oder Zellulosefasern mit der Polypropylenmatrix imprägniert werden.

18. Zwischenprodukt zur Herstellung geschäumter Bahnen, die durch Formpressen des Zwischenprodukts gebildet werden, wobei das Zwischenprodukt in Form einer Bahn vorhanden ist, die aus einer Mischung aus Polypropylen und Pflanzenfasern besteht, **dadurch gekennzeichnet, dass** das Zwischenprodukt eine teilweise geschäumte Bahn ist und ein chemisches Schäumungsmittel umfasst, das zu einem derartigen Grad aktiviert wird, dass während der Bahnherstellung ein teilweises Schäumen erreicht wird, und das geeignet ist, zu einem späteren Zeitpunkt nach der Herstellung der teilweise geschäumten Bahn thermisch aktiviert zu werden, um den Schäumungsvorgang zu vervollständigen, wobei das Zwischenprodukt aus einer Mischung nach einem oder mehreren der Ansprüche 1 bis 9 hergestellt ist.

19. Zwischenprodukt nach Anspruch 18, **dadurch gekennzeichnet, dass** Azodicarbonamid, Oxybis, Natriumbicarbonat, Natriumbicarbonat/Zitronensäure als chemisches Schäumungsmittel verwendet werden oder eine andere Mischung aus sauren und basischen Verbindungen derart, dass sie bei Extrusions- oder Schmelztemperatur des Materials aktiviert werden und Gas oder Gasmischungen freisetzen können, die hauptsächlich aus CO₂ bestehen.

20. Verfahren zum Erhalten eines Zwischenprodukts nach Anspruch 18 oder 19, **dadurch gekennzeichnet, dass** es einen oder mehrere Schritte nach Anspruch 10 bis 17 umfasst.

21. Verfahren zur Herstellung einer thermogeformten, geschäumten Bahn durch Formpressen, wobei die Bahn aus einem Material nach einem oder mehreren der vorhergehenden Ansprüche 1 bis 9 gebildet wird, **dadurch gekennzeichnet, dass** das Verfahren den Schritt des Erhitzens eines Zwischenproduktes, das aus einer teilweise geschäumten Bahn nach Anspruch 18 oder 19 besteht, auf die Aktivierungstemperatur des chemischen Schäumungsmittels umfasst, gefolgt vom dreidimensionalen Ausbilden der auf diese Temperatur erhitzten Bahn in einer Pressform.

## Revendications

1. Feuille de polypropylène expansé, ladite feuille étant constituée d'un mélange de polypropylène et d'une charge végétale, à ajouter avec un gaz ou un autre agent de moussage, **caractérisée en ce que** le mélange contient 49 à 71% en poids de polypropylène et 29 à 51% en poids de charges de fibres végétales, la feuille ayant une densité inférieure à 1, et de préférence d'environ 0,9 ou moins, le mélange comprenant en outre un composant hydrofuge additionnel en fibres végétales.

2. Feuille selon la revendication 1, **caractérisée en ce que**, comme agent hydrofuge, sont utilisés des agents de compatibilisation constitués de molécules organiques avec des substituants hydrophiles.

3. Feuille selon la revendication 2, **caractérisée en ce que**, comme agent de compatibilisation, sont utilisés du silane ou organo-silane, zircoaluminate ou des composés aluminates ou un composé organique avec des substituants d'anhydride maléique, particulièrement des polyoléfines maléiques modifiées par l'anhydride.

4. Feuille selon l'une ou plusieurs des revendications précédentes, **caractérisée en ce que** le dioxyde de carbone, azote, hélium, H₂O, butane et des composés d'hydrocarbure à point d'ébullition bas, HFC sont utilisés comme agents de moussage physiques, et azodicarbonamide, oxybis, bicarbonate de sodium, bicarbonate de sodium et des mélanges d'acide citrique ou un mélange basique de sorte qu'ils sont activés aux températures d'extrusion ou de moulage du matériau et sont aptes à libérer du gaz ou des mélanges de gaz essentiellement constitués de CO₂, sont utilisés comme agents de moussage chimiques.

5. Feuille selon une ou plusieurs des revendications précédentes, **caractérisée en ce que** les agents de moussage sont ajoutés en une quantité de 0,02% en poids à 20% en poids du mélange.

6. Feuille selon l'une ou plusieurs des revendications précédentes, **caractérisée en ce que** le mélange comprend une quantité de farine de liège de 1 à 70% en poids du mélange du matériau de la feuille, la granulométrie de la farine de liège étant inférieure à 5 mm, en s'étendant particulièrement de 0,1 à 0,8 mm.

7. Feuille selon une ou plusieurs des revendications précédentes, **caractérisée en ce que** le mélange comprend des fibres de verre.

8. Feuille selon une ou plusieurs des revendications précédentes, **caractérisée en ce que** le mélange comprend une quantité de fibres de cellulose oblongues dans une plage de 3 à 33% en poids du mélange de matériau de feuille, les fibres de cellulose ayant les longueurs dans une plage de 2 à 25mm.

9. Feuille selon la revendication 8, **caractérisée en ce que** le mélange de matériau comprend un agent de compatibilisation et hydrofuge pour la compatibilisation du matériau plastique et en particulier du matériau de polyoléfine avec les fibres de cellulose, et pour rendre hydrofuges les fibres de cellulose longues, en utilisant des agents de compatibilisation/hydrofugation identiques ou différents pour les fibres de cellulose longues et pour les fibres végétales.

10. Procédé de fabrication d'une feuille expansée telle que revendiquée dans une ou plusieurs des revendications précédentes, où le procédé comprend les étapes consistant à mélanger le composant de polypropylène avec la charge en fibres végétales, et l'obtention de la feuille par extrusion dudit mélange en utilisant une extrudeuse, un agent de moussage, sous la forme d'un agent physique ou chimique étant ajouté au polypropylène et au mélange de fibres végétales, **caractérisé en ce que** les fibres végétales sont traitées, avant l'extrusion avec un agent pour l'hydrofugation desdites fibres végétales et avec un agent pour la compatibilisation du polypropylène avec les fibres végétales.

11. Procédé selon la revendication 10, **caractérisé en ce que** les agents de moussage physiques et/ou les agents de moussage chimiques ont une activation directe et immédiate dans l'extrudeuse, et de ce fait le moussage peut se produire directement, au même moment où la feuille est extrudée.

12. Procédé selon la revendication 10, **caractérisé en ce que** l'agent de moussage est du type chimique et est seulement partiellement activé, c'est-à-dire provoque un moussage partiel, durant l'extrusion, ledit moussage étant complété durant le processus de formage, par chauffage à une température d'activation prédéterminée de l'agent de moussage chimique.

13. Procédé selon la revendication 10, **caractérisé en ce que** le traitement avec l'agent d'hydrofugation est exécuté soit durant le mélange des fibres végétales avec le polypropylène soit lors d'une étape préventive durant laquelle les fibres végétales seulement sont traitées avec l'agent d'hydrofugation.

14. Procédé selon l'une ou plusieurs des revendications précédentes 10 à 13, **caractérisé en ce que** le procédé comprend l'étape consistant à ajouter des fibres de cellulose longues, et l'agent de compatibilisation/hydrofugation est mélangé avec les fibres de cellulose longues avant d'ajouter lesdites fibres au mélange du matériau de polyoléfine et de la charge de fibres végétales.

15. Procédé selon l'une ou plusieurs des revendications précédentes 10 à 13, **caractérisé en ce que** le procédé comprend l'étape consistant à ajouter des fibres de cellulose longues, et les fibres de cellulose longues sont mélangées avec la charge de fibres végétales et avec l'agent de compatibilisation/hydrofugation avant l'addition du constituant de matériau de polyoléfine.

16. Procédé selon l'une ou plusieurs des revendications précédentes 10 à 15, **caractérisé en ce que** l'agent de compatibilisation et d'hydrofugation est mélangé séparément et en diverses quantités avec les fibres de cellulose et les fibres végétales, avant le mélange de celles-ci les unes avec les autres et avec la masse du matériau de polyoléfine.

17. Procédé selon l'une ou plusieurs des revendications 10 à 16, **caractérisé en ce que** les fibres végétales et/ou les fibres de cellulose sont rendues hydrofuges en utilisant un agent pour la compatibilisation desdites fibres végétales et/ou fibres de cellulose avec la matrice de polypropylène.

18. Produit intermédiaire pour fabriquer des feuilles expansées formées par moulage par compression dudit produit intermédiaire, et ledit produit intermédiaire se présente sous la forme d'une feuille constituée d'un mélange de polypropylène et de fibres végétales, **caractérisé en ce que** ledit produit intermédiaire est une feuille partiellement moussée et comprend un agent de moussage chimique activé dans une mesure suffisante pour obtenir un moussage partiel durant la fabrication de la feuille et capable d'une application thermique à un moment ultérieur après la fabrication de ladite feuille partiellement moussée, pour l'achèvement du processus de moussage, ledit produit intermédiaire étant réalisé par un mélange selon l'une ou plusieurs des revendications 1 à 9.

19. Produit intermédiaire selon la revendication 18, **caractérisé en ce que** de l'azodicarbonamide, oxybis, bicarbonate de sodium, bicarbonate de sodium/acide citrique sont utilisés comme agents de moussage chimiques ou un mélange des composés acides et basiques de sorte qu'ils sont activés à des températures d'extrusion ou de moulage du matériau apte à libérer des gaz ou des mélanges de gaz constitués essentiellement de CO₂.

20. Procédé d'obtention d'un produit intermédiaire selon la revendication 18 ou 19, **caractérisé en ce qu'**il comprend une ou plusieurs étapes de procédé telles que revendiquées dans les revendications 10 à 17.

21. Procédé de fabrication d'une feuille expansée thermoformée par moulage par compression, ladite feuille est formée en un matériau tel que revendiqué dans une ou plusieurs des revendications précédentes 1 à 9, **caractérisé en ce que** le procédé comprend l'étape consistant à chauffer un produit intermédiaire consistant en une feuille qui est partiellement expansée, comme revendiqué dans la revendication 18 ou 19 à la température d'activation de l'agent de moussage chimique, suivi du formage tridimensionnel de la feuille chauffée à ladite température dans un moule de compression.
